# DEMANDE DE BREVET EUROPEEN

(11) **EP 2 197 234 A2**
(43) Date de publication de la demande: **16.06.2010**
(21) Numéro de dépôt: 09177511.4
(22) Date de dépôt: 30.11.2009
(51) Int. Cl.: H04W 64/00

(54) **Procédé de localisation d'un objet**

(30) Priorité: 11.12.2008 FR 0858495
(71) Demandeur: FRANCE TELECOM, 75015 Paris (FR)
(72) Inventeur: Abinakhoul, Alain, 75007, PARIS (FR)

(57) **Abrégé**

L'invention a trait à un procédé de localisation d'un objet (MOB) apte à être localisé par l'intermédiaire d'un moyen de localisation (MLOCn, n=1 à 4) et à communiquer au travers d'au moins un réseau de communication (RES1,RES2) formant une zone de couverture réseau respective (Z1,Z2). Le procédé est **caractérisé en ce que**, si l'objet se situe dans une zone couverte par au moins deux réseaux différents, le procédé comprend une étape de sélection d'un réseau en fonction des moyens de localisation disponibles dans la zone dans laquelle se situe l'objet à localiser.

## Description

### Domaine technique

L'invention se rapporte à la localisation d'un objet, et tout particulièrement à la localisation d'un objet mobile. L'objet mobile en question regroupe tout dispositif apte à communiquer avec au moins un réseau et à être localisé géographiquement. L'objet peut être indifféremment un radiotéléphone, un assistant électronique du type PDA (Personal Digital Assistant), un dispositif de guidage par exemple installé dans un véhicule, une carte sans contact, un badge, etc.

Le moyen de localisation est quelconque; ce moyen peut être indifféremment un moyen de localisation utilisant le positionnement par satellite GPS (Global Positionning System), un moyen de localisation utilisant les réseaux de téléphonie mobile tel que le différentiel temps plus connu sous le sigle EOTD (Enhanced Observed Time Difference) ou le système d'identification de cellule GSM, la technique de Localisation par « Différentiel d'arrivée » (TDOA - Time Difference of Arrival), la triangulation, le moyen WPS (Wi-Fi Positioning System), etc.

### Etat de la technique

Aujourd'hui, nombreux sont les fournisseurs de services offrant des services basés sur la localisation. Par exemple, des services de guidage offrent la possibilité de recevoir des informations de guidage sur un objet mobile, les informations étant aptes à guider un utilisateur muni de l'objet lors de son déplacement.

Actuellement, la localisation est précédée d'une étape de sélection du moyen de localisation le plus performant qui sera utilisé pour localiser l'objet. La sélection du moyen de localisation consiste tout d'abord, à calculer la position de l'objet par l'intermédiaire de chaque moyen de localisation disponible, successivement. La sélection consiste ensuite à comparer les positions obtenues. Enfin, la sélection consiste à sélectionner le moyen de localisation ayant, par exemple, fourni la position le plus rapidement possible ou ayant fourni une position dont l'incertitude estimée est la plus faible possible.

Aussi, certains objets sont équipés de moyens leur permettant de communiquer au travers de plusieurs réseaux de communication. Le plus souvent, le réseau sélectionné pour la communication est sélectionné par défaut. Le choix du moyen de localisation se limite alors aux moyens de localisation disponibles pour le réseau sélectionné.

L'invention vient améliorer la situation.

### L'invention

A cet effet, l'invention a pour objet un procédé de localisation d'un objet apte à être localisé par l'intermédiaire d'un moyen de localisation et à communiquer au travers d'au moins un réseau de communication formant une zone de couverture réseau respective, **caractérisé en ce que** si l'objet se situe dans une zone couverte par au moins deux réseaux différents, le procédé comprend une étape de sélection d'un réseau en fonction des moyens de localisation disponibles dans la zone dans laquelle se situe l'objet à localiser.

Ainsi, selon l'invention, le réseau de communication utilisé n'est plus choisi par défaut mais judicieusement en fonction du ou des moyens de localisation disponibles pour les réseaux dont les couvertures réseaux respectives recouvrent la position courante de l'objet à localiser. Selon l'invention, tous les moyens de localisation disponibles sont identifiés avant la sélection du réseau de communication à utiliser et ce n'est qu'une fois le moyen de localisation sélectionné que le réseau peut être sélectionné. On comprend donc que le nombre de moyens de localisation aptes à être sélectionné pour la localisation est plus important que dans l'état de la technique.

Un moyen de localisation est apte à fournir une localisation avec une précision respective. Dans cette configuration, selon une variante, le réseau sélectionné lors de l'étape de sélection est le réseau associé au moyen de localisation le plus précis parmi l'ensemble des moyens de localisation disponibles dans la zone couverte par lesdits au moins deux réseaux. Ainsi, grâce à cette variante, le réseau sélectionné est le réseau offrant le moyen de localisation le plus précis parmi l'ensemble des moyens de localisation disponibles. Ainsi, non seulement il est possible de sélectionner un réseau parmi plusieurs réseaux en fonction des moyens de localisation disponibles, mais en plus le choix se porte sur le réseau dont le ou les moyens de localisation disponibles pour ce réseau fourniront les meilleurs résultats pour la localisation de l'objet.

Selon un aspect matériel, l'invention se rapporte à un module de sélection d'un moyen de localisation apte à localiser un objet, l'objet étant apte à communiquer au travers d'une pluralité de réseaux de communication formant une zone de couverture réseau respective, **caractérisé en ce qu**'il comprend des moyens de sélection aptes à sélectionner un réseau en fonction des moyens de localisation disponibles dans la zone dans laquelle se situe l'objet à localiser.

Comme indiqué dans ce qui précède, un moyen de localisation est apte à fournir une localisation avec une précision respective. Selon une variante, Le dispositif de sélection comprend des moyens d'identification du moyen de localisation le plus précis parmi l'ensemble des moyens de localisation disponibles dans la zone, et en ce que les moyens de sélectionner sont aptes à sélectionner le réseau en fonction de l'étape d'identification.

Selon une variante, le module de sélection comprend des moyens d'identification du moyen de localisation le plus précis parmi l'ensemble des moyens de localisation disponibles dans la zone dans laquelle se situe l'objet à localiser, et en ce que les moyens de sélection sont aptes à sélectionner un réseau en fonction du résultat de l'étape d'identification.

L'invention a trait aussi à un objet apte à être localisé par l'intermédiaire d'un moyen de localisation et à communiquer au travers d'au moins un réseau de télécommunication formant une zone de couverture réseau respective, **caractérisé en ce qu**'il comprend un dispositif de sélection tel que défini ci-dessus.

L'invention a aussi trait à un dispositif de traitement de données, tel qu'un serveur, apte à communiquer avec au moins un réseau de communication, **caractérisé en ce qu**'il comprend un module de sélection tel que défini ci-dessus.

L'invention se rapporte aussi au programme d'ordinateur comprenant des instructions de code qui, lorsqu'il est exécuté sur un dispositif de traitement de données, réalise les étapes du procédé de l'invention défini ci-dessus, à savoir lorsque l'objet se situe dans une zone couverte par au moins deux réseaux différents, une étape de sélection d'un réseau en fonction des moyens de localisation disponibles dans ladite zone.

L'invention se rapporte aussi au support d'enregistrement lisible par un dispositif de traitement de données sur lequel est enregistré un programme d'ordinateur comprenant des instructions pour l'exécution des étapes du procédé de l'invention défini ci-dessus, à savoir lorsque l'objet se situe dans une zone couverte par au moins deux réseaux différents, une étape de sélection d'un réseau en fonction des moyens de localisation disponibles dans ladite zone.

L'invention sera mieux comprise à la lecture de la description qui suit, donnée à titre d'exemple et faite en référence aux dessins annexés.

### Les figures :

La figure 1 représente un système informatique sur lequel est illustré un mode de réalisation du procédé de localisation.

La figure 2 représente une table regroupant pour chaque réseau, ou type de réseau, le ou les moyens de localisation adaptés pour localiser un objet dans ce réseau.

La figure 3 est un exemple d'un cas particulier de recouvrement de réseaux pour l'illustration d'une variante du procédé de l'invention.

L'invention sera mieux comprise à la lecture de la description qui suit, donnée à titre d'exemple et faite en référence aux dessins annexés.

### Description détaillée d'un exemple de réalisation illustrant l'invention

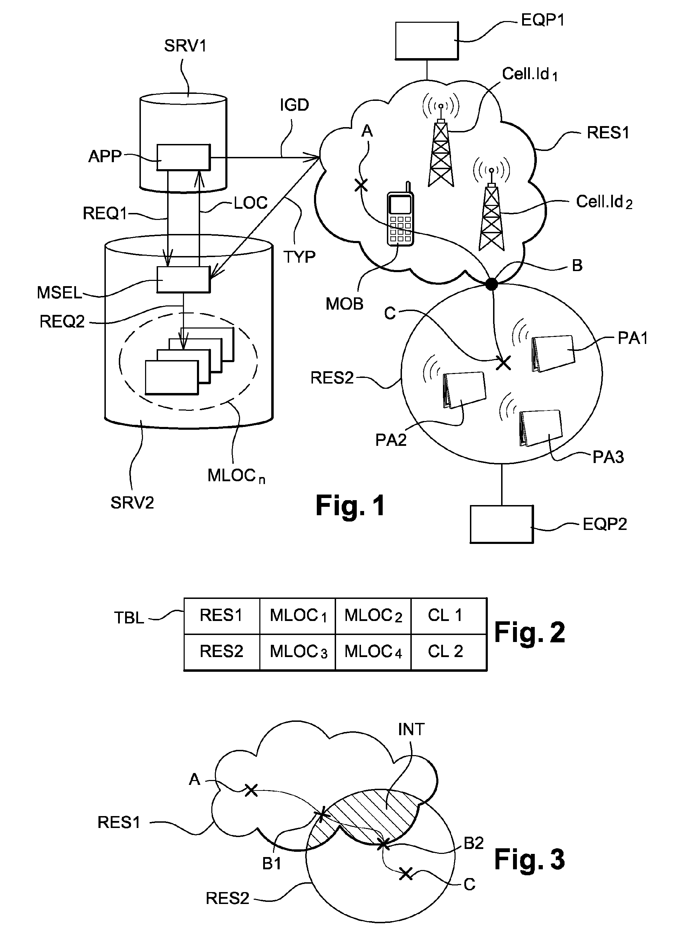

La figure 1 représente un système informatique SYS dans lequel peut être mise en oeuvre l'invention, ainsi qu'un milieu, représenté par un trajet TRJ dans notre exemple, qu'un utilisateur UT est susceptible de parcourir muni d'un objet MOB tel qu'un radiotéléphone. Dans notre exemple, cet objet est mobile. L'objet est apte à communiquer avec des dispositifs au travers de réseaux de communication RES1 et RES2.

Le système SYS comprend un dispositif de traitement de données illustré au moyen d'un premier serveur SRV1. Le premier serveur SRV1 stocke une application de guidage APP apte à guider l'utilisateur lors de son déplacement. A noter qu'un dispositif de traitement de données comprend au moins un microprocesseur et des ressources physiques et/logicielles aptes à traiter des données.

Dans notre exemple, l'application de guidage APP peut faire appel à quatre moyens de localisation MLOCn (n=1 à 4) pour localiser l'objet mobile MOB. Naturellement, ce nombre ne constitue qu'un exemple de réalisation, celui-ci peut-être inférieur ou supérieur.

Dans notre exemple de réalisation, ces moyens de localisation MLOCn (n=1 à 4) sont stockés sur un deuxième dispositif de traitement de données, dit deuxième serveur SRV2. Ce deuxième serveur comprend, comme le premier serveur, au moins un microprocesseur et des ressources physiques et/logicielles aptes à traiter des données.

Dans notre exemple, le premier moyen MLOC1 et le deuxième moyen MLOC2 sont adaptés pour localiser un objet dans un réseau mobile de type GSM. Le premier moyen de localisation est par exemple un moyen de localisation utilisant les réseaux de téléphonie mobile tel que le différentiel temps plus connu sous le sigle EOTD (Enhanced Observed Time Difference), et le deuxième moyen est par exemple la technique de triangulation connue de l'homme du métier.

Le troisième moyen MLOC3 et le quatrième moyen LOC4 sont adaptés pour localiser un objet dans un réseau de type WI-FI. Le troisième moyen est par exemple la technique WPS (Wi-Fi Positioning System) connue de l'homme du métier. Grâce à une base de données (non représentée) contenant les localisations exactes des points d'accès Wi-Fi, ce moyen de localisation est capable de localiser précisément l'endroit ou l'objet se situe.

Le quatrième moyen de localisation est par exemple la technique de Localisation par « Différentiel d'arrivée » (TDOA - Time Difference of Arrival) plus connu sous l'acronyme TDOA.

L'application APP est également apte à fournir des informations de guidage IGD destinée à l'utilisateur de l'objet mobile MOB. Les informations de guidage sont généralement accessibles visuellement sur un écran du radiotéléphone que l'utilisateur peut lire. Les informations de guidage généralement fournies sont une carte sur laquelle apparaît la position courante de l'objet mobile et l'itinéraire prévu lorsqu'un trajet TRJ a été défini par l'utilisateur.

A noter que la réception des données de localisation et la fourniture des informations de guidage IGD peuvent être réalisées par deux applications distinctes.

Dans notre exemple, l'utilisateur parcourt un trajet TRJ comprenant deux portions, un première portion (A,B) et une deuxième portion (B,C). Sur ce trajet TRJ, l'objet MOB utilisera deux réseaux dans l'ordre suivant:
- sur la portion (A,B), un premier réseau de communication mobile de type GSM, référencé RES1,
- et sur la portion (B,C), un deuxième réseau de communication WI-FI référencé RES2.

Dans notre exemple une table TBL, représentée à la figure 2, regroupe pour chaque réseau, ou chaque type de réseau, le ou les moyens de localisation adaptés pour localiser un objet.

A noter qu'on considère dans la présente demande qu'un moyen de localisation est adapté à un réseau lorsque le temps d'obtention d'une localisation par ce moyen est inférieur à une limité fixée et/ou lorsque la précision de la localisation, ou l'incertitude, obtenue par ce moyen de localisation est jugée satisfaisante. La précision ou le temps d'obtention de la localisation sont des valeurs arbitraires définies au cas par cas, par exemple par le fournisseur de service, en fonction du degré de précision souhaité, ou du délai d'obtention souhaité pour l'obtention d'une localisation. D'autres paramètres, autres que le délai d'obtention ou la précision, peuvent être pris en compte pour juger qu'un moyen de localisation est adapté au calcul d'une localisation dans un réseau donné. Ces autres paramètres peuvent être par exemple l'heure du calcul de la localisation, les conditions météorologiques, l'environnement dans lequel se trouve l'objet lors du calcul de la localisation, etc. L'environnement peut être un environnement intérieur ou extérieur. L'environnement peut avoir son importance par exemple lorsque la localisation est calculée à la base de signaux GPS; en effet, lorsque l'objet à localiser est en environnement extérieur avec une bonne visibilité du ciel, la localisation sera précise; à l'inverse, dans un environnement intérieur, c'est-à-dire un environnement dans lequel les signaux GPS sont sujets à des perturbations non désirées telles que la réflexion, la diffraction, ou autres perturbations, la localisation calculée est souvent très éloignée de la localisation réelle de l'objet.

On comprend ici que le premier ou le deuxième moyen de localisation conviendront pour réaliser une localisation de l'objet dans le premier réseau, en particulier sur la portion (A,B). De même, le troisième et le quatrième réseau conviendront pour réaliser une localisation de l'objet dans le deuxième réseau en particulier sur la portion (B,C).

Dans notre exemple de réalisation, le premier réseau mobile RES1 comprend des antennes CELL-ID1 et CELL-ID2 au moyen desquelles les moyens de localisation peuvent calculer une position de l'objet MOB. Les antennes CELL-ID1 et CELL-ID2 sont aptes à émettre des ondes de type GSM et forment ensembles une première zone 21 de couverture. De même, dans notre exemple, le réseau RES2 comprend trois passerelles domestiques PA1, PA2 et PA3 aptes à émettre des ondes WI-FI et forment ensemble une deuxième zone de couverture Z2. Le troisième moyen de localisation et le quatrième moyen se basent sur ces ondes WI-FI pour obtenir une position de l'objet MOB.

Le premier réseau RES1 et le deuxième réseau RES2 forment une zone de couverture réseau respective Z1 et Z2. Dans notre exemple, le choix du moyen de localisation est effectué par un module de sélection MSEL par exemple stocké sur le deuxième serveur SRV2. Ce module de sélection comprend des instructions de code stockées dans une mémoire du deuxième serveur. Dans notre exemple, le module comprend des premiers moyens de sélection d'un réseau dont la zone de couverture recouvre la position courante de l'objet, et des deuxièmes moyens de sélection d'au moins un moyen de localisation adapté audit réseau sélectionné.

Les étapes du procédé de localisation géographique selon l'invention sont réalisées lorsque le code est exécuté par le microprocesseur installé dans le deuxième serveur SRV2. Ces étapes sont décrites ci-dessous.

A noter que l'invention ne limite pas à la configuration qui précède. L'application de guidage APP, le module de sélection MSEL et les moyens de localisation pourraient être stockés sur un même serveur ou sur des serveurs différents.

Dans notre exemple, le module MSEL communique directement ou indirectement avec l'application de guidage APP. Le lieu de stockage du module de sélection MSEL est sans importance pour la réalisation de l'invention, celui-ci pouvant se trouver à un endroit quelconque du réseau par exemple dans l'objet à localiser.

Dans le mode de mise en oeuvre particulier de l'invention illustré relativement à la figure 1, l'objet MOB requiert l'exécution de l'application APP afin d'obtenir des informations sur son objet.

Ensuite, lors d'une deuxième étape, l'application requiert la localisation de l'objet MOB. Une première requête RQ1 est émise vers le deuxième serveur SRV2.

Au cours de son déplacement, l'objet MOB communique avec le module MSEL pour lui communiquer une information TYP permettant d'identifier l'ensemble des réseaux dont la zone de couverture respective recouvre la position courante de l'objet. Dans notre exemple, l'objet communique une information TYP permettant d'identifier le premier réseau RES1.

A noter que la communication de l'information TYP peut être faite directement du radiotéléphone vers le module de sélection MSEL ou indirectement par l'intermédiaire d'un dispositif du réseau (non représenté), par exemple par l'intermédiaire du premier serveur SRV1.

Le module MSEL reçoit l'information TYP identifiant le premier réseau RES1.

Ensuite, le module de sélection MSEL sélectionne SEL l'ensemble des moyens de localisation adapté pour localiser l'objet MOB dans le réseau concerné. Pour cela, dans notre exemple, le module interroge la table TBL et obtient la liste des moyens de localisation adaptés à la localisation d'un radiotéléphone dans le premier réseau, à savoir le premier et le deuxième moyen de localisation.

Le module MSEL requiert, par l'intermédiaire d'une deuxième requête REQ2, une localisation du radiotéléphone MOB par l'intermédiaire du premier moyen de localisation et/ou du deuxième moyen de localisation.

Ensuite, la localisation LOC obtenue est transmise à l'application de guidage qui transmet au radiotéléphone MOB les informations de guidage IGD fonction de cette localisation.

L'objet affiche ensuite les informations sur l'écran.

Ensuite, l'objet franchit le point B et entre dans la deuxième zone de couverture Z2 associée au deuxième réseau RES2.

Dans la deuxième zone Z2, l'objet MOB communique avec le module MSEL pour lui communiquer une information TYP permettant d'identifier l'ensemble des réseaux courant dont la zone de couverture respective recouvre la position courante de l'objet. Dans notre exemple, l'objet communique une information TYP permettant d'identifier le deuxième réseau RES2.

Le module MSEL reçoit l'information TYP identifiant le deuxième réseau RES2.

Ensuite, le module de sélection MSEL sélectionne SEL l'ensemble des moyens de localisation adapté pour localiser l'objet MOB dans le réseau concerné. Pour cela, le module interroge la table et obtient les moyens de localisation associés au deuxième réseau à savoir le troisième et le quatrième moyen de localisation.

Le module MSEL requiert, par l'intermédiaire d'une deuxième requête REQ2, une localisation du radiotéléphone MOB par l'intermédiaire du troisième moyen de localisation et/ou du quatrième moyen de localisation.

Ensuite, la localisation LOC obtenue est transmise à l'application de guidage qui transmet au radiotéléphone MOB les informations de guidage IGD. L'objet affiche ensuite les informations sur l'écran.

L'exemple qui précède se base sur deux réseaux adjacents qui ne se recouvrent pas. Or, le plus souvent les réseaux se recouvrent en ce sens que leur zone de couverture respective forme une intersection. Cette variante est illustrée à la figure 3. Sur cette figure 3 sont représentés les mêmes types de réseau que ceux illustrés à la figure 1, à la différence que les zones de couverture forment une intersection INT. Dans cette configuration, si l'objet se situe dans une zone couverte par au moins deux réseaux différents, la première étape de sélection est précédée d'une étape d'identification des réseaux ayant une zone de couverture recouvrant la position courante de l'objet. Pour cela, dans notre exemple, le module de sélection MSEL comprend des moyens d'identification des réseaux dont la zone de couverture recouvre la position courante de l'objet.

Cette étape d'identification peut être réalisée par l'objet ou issue de tout ou partie des réseaux concernés.

Si l'objet MOB réalise l'identification, celui-ci est équipé de moyens aptes à recevoir une information apte à identifier tout ou partie des réseaux ayant une zone de couverture incluant sa position courante. Pour cela, l'objet comprend des moyens pour identifier les réseaux dont la zone de couverture couvre sa position courante, et des moyens de transmission des réseaux identifiés.

Si l'identification est issue de tout ou partie des réseaux concernés, ceux-ci incluent des moyens de réception aptes à recevoir du radiotéléphone une information apte à identifier l'objet et des moyens aptes à émettre à destination du module sélection MSEL l'identifiant en question et le réseau utilisé, ou le type de réseau utilisé. Pour cela, les réseaux disposent d'un équipement EQP1 et EQP2 comprenant chacun des moyens aptes à identifier la présence d'un objet dans ladite zone de couverture et des moyens de transmission aptes à transmettre au moins une information identifiant l'objet.

A noter que l'identification peut être réalisée à, la fois par l'objet et par les réseaux concernés.

Une fois les réseaux, ou types de réseaux, identifiés, l'étape de sélection consiste à interroger la table et à sélectionner un des ensembles associés aux réseaux identifiés ou types de réseau identifiés. Dans notre exemple, l'ensemble sélectionné est celui qui regroupe le moyen de localisation le plus performant en terme de précision parmi l'ensemble des moyens de localisation des ensembles concernés.

Pour cela, la table décrite précédemment comprend des données supplémentaires permettant au moyen de sélection MSEL de sélectionner un ensemble parmi plusieurs ensembles en fonction de la performance des moyens de localisation. Dans notre exemple, chaque ensemble de moyens de localisation (MLOC1,MLOC2) et (MLOC3,MLOC4) est associé à une classe respective (CL1, CL2) représentative de la performance de l'ensemble en terme de précision de la localisation. Ainsi, sur la table de la figure 2, une colonne indique une première classe CL1 et une deuxième classe CL2 relativement au premier réseau RES1 et au deuxième réseau RES2, respectivement.

Dans notre exemple, la première classe CL1 regroupe des moyens de localisation plus performants que les moyens de la deuxième classe CL2. Ainsi, dans notre exemple, l'ensemble formé par le premier et le deuxième moyen de localisation est plus performant que l'ensemble formé par le troisième et le quatrième moyen de localisation.

Dans cette variante, le trajet peut être découpé en trois portions (A,B1), (B1,B2) et (B2,C), (B1,B2) correspondant à la portion du trajet situé dans l'intersection INT.

Le procédé de localisation pour la portion (A,B1) est le même que celui décrit précédemment relativement à la (A,B). de même, le procédé de localisation pour la portion (B2,C) est le même que celui décrit précédemment relativement à la (B,C).

Selon cette variante, le procédé de localisation s'appliquant à la portion (B1,B2) est différent.

Sur cette portion (B1,B2), les étapes sont décrites ci-dessous.

Le module MSEL reçoit dans un premier temps une information TYP indiquant les réseaux couvrant la position courante de l'objet, à savoir le premier réseau RES1 et le deuxième réseau RES2.

Ensuite, le module MSEL sélectionne dans la table l'ensemble des moyens de localisation les plus performants parmi les ensembles associés aux réseaux RES1 et RES2. Dans notre exemple, le module MSEL sélectionne les moyens de localisation associés au premier réseau, c'est-à-dire les moyens associés à la première classe CL1.

Ensuite, le module MSEL requiert REQ2 une localisation du radiotéléphone MOB grâce à l'ensemble formé par le premier et deuxième moyen de localisation.

A réception de la localisation, celle-ci est transmise à l'application de guidage APP.

L'application de guidage transmet ensuite des informations de guidage IDG à l'objet OBJ.

L'objet affiche ensuite les informations IGD sur l'écran.

La variante qui précède s'applique notamment aux objets équipés de moyens aptes à communiquer avec au moins deux réseaux. Un tel objet est par exemple le radiotéléphone vendu sous la marque UNIK (marque déposée par la demanderesse). Ce type de radiotéléphone comprend des moyens pour communiquer soit via le réseau WI-FI (Wireless Fidelity), par exemple lorsqu'il est à portée d'une passerelle domestique émettant les ondes WI-FI, soit via le réseau GSM (Global System for Mobile Communications) lorsqu'il est hors de portée de la passerelle et dans une zone couverte par le réseau GSM.

Dans l'exemple qui précède, chaque ensemble de moyens de localisation (MLOC1,MLOC2) et (MLOC3,MLOC4) est associé à une classe respective (CL1, CL2) représentative de la performance de l'ensemble en terme de précision de la localisation. Une variante pourrait consister à associer à chaque moyen de localisation une classe respective représentative de la performance de chaque moyen de localisation en terme de précision de la localisation.

A noter que l'invention peut être mise en oeuvre au cours d'une procédure de localisation de l'objet. Par exemple, lorsqu'il n'y a pas de demande de localisation en cours, la sélection du réseau peut être réalisée comme dans l'état de la technique à savoir en sélectionnant un réseau par défaut. Ensuite, lorsqu'une demande de localisation est reçue par l'application APP, le procédé s'exécute et une sélection d'un réseau est effectuée en fonction des moyens de localisation disponibles. Après obtention de la localisation, le réseau peut être celui défini par défaut, ou celui issu du procédé de l'invention, au choix.

## Revendications

1. Procédé de localisation d'un objet (MOB) apte à être localisé par l'intermédiaire d'un moyen de localisation (MLOCn, n=1 à 4) et à communiquer au travers d'au moins un réseau de communication (RES1,RES2) formant une zone de couverture réseau respective (Z1,Z2), **caractérisé en ce que** si l'objet se situe dans une zone couverte par au moins deux réseaux différents, le procédé comprend une étape de sélection d'un réseau en fonction des moyens de localisation disponibles dans la zone dans laquelle se situe l'objet à localiser.

2. Procédé de localisation selon la revendication1, **caractérisé en ce qu'**un moyen de localisation est apte à fournir une localisation avec une précision respective, et **en ce que** le réseau sélectionné lors de l'étape de sélection est le réseau associé au moyen de localisation le plus précis parmi l'ensemble des moyens de localisation disponibles dans la zone couverte par lesdits au moins deux réseaux.

3. Module de sélection (MSEL) d'un moyen de localisation apte à localiser un objet, l'objet étant apte à communiquer au travers d'une pluralité de réseaux de communication (RES1,RES2) formant une zone de couverture réseau respective (Z1,Z2)" **caractérisé en ce qu'**il comprend des moyens de sélection aptes à sélectionner un réseau en fonction des moyens de localisation disponibles dans la zone dans laquelle se situe l'objet à localiser.

4. Module de sélection (MSEL) selon la revendication 3, **caractérisé en ce qu'**il comprend des moyens d'identification du moyen de localisation le plus précis parmi l'ensemble des moyens de localisation disponibles dans la zone dans laquelle se situe l'objet à localiser, et **en ce que** les moyens de sélection sont aptes à sélectionner un réseau en fonction du résultat de l'étape d'identification.

5. Objet (MOB) apte à être localisé par l'intermédiaire d'un moyen de localisation (MLOCn, n=1 à 4) et à communiquer au travers d'au moins un réseau de télécommunication (RES1,RES2) formant une zone de couverture réseau respective (Z1,Z2), **caractérisé en ce qu'**il comprend un module de sélection (MSEL) tel que défini dans la revendication 3.

6. Dispositif de traitement de données (SRV2) apte à communiquer avec au moins un réseau de communication (RES1,RES2), **caractérisé en ce qu'**il comprend un module de sélection (MSEL) tel que défini dans la revendication 3.

7. Programme d'ordinateur apte à être mis en oeuvre sur un dispositif tel que défini dans la revendication 3, ledit programme comprenant des instructions de code qui, lorsqu'il est exécuté sur un dispositif de traitement de données, réalise les étapes du procédé selon la revendication 1.

8. Support d'enregistrement lisible par un dispositif de traitement de données sur lequel est enregistré un programme d'ordinateur comprenant des instructions pour l'exécution des étapes du procédé selon la revendication 1.
